# EUROPEAN PATENT SPECIFICATION

(11) **EP 3 012 302 B1**
(45) Date of publication and mention of the grant of the patent: **30.09.2020**
(21) Application number: 14189747.0
(22) Date of filing: 21.10.2014
(51) Int. Cl.: C09J 7/40

(54) **Release liner for pressure sensitive adhesives**
Trennschicht für druckempfindliche Haftmittel
Doublure détachable pour adhésifs sensibles à la pression

(43) Date of publication of application: 27.04.2016
(73) Proprietor: 3M Innovative Properties Company, Saint Paul, MN 55133-3427 (US)
(72) Inventor: Zulkarnain, Daniel, 41453 Neuss (DE); Gillhaus, Guido, 41453 Neuss (DE)
(74) Representative: Hettstedt, Stephan

(56) References cited:
- EP-A2- 1 013 732
- US-A1- 2010 003 441
- loparex: "Release Liners for TAPES", , April 2007 (2007-04), XP002735827, Retrieved from the Internet: URL:http://www.loparex.com.cn/upfile/2010- 1-27/2010012762448533.pdf [retrieved on 2015-02-11]

## Description

### Technical Field

The present disclosure relates generally to the field of adhesives, in particular to the field of release liners suitable for use in pressure sensitive adhesives (PSA). More specifically, the present disclosure relates to a method of applying a pressure sensitive adhesive tape assembly comprising a release liner and a pressure sensitive adhesive layer. The present disclosure is also directed to uses of such pressure sensitive adhesive tape assemblies.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

Pressure sensitive adhesive tapes typically include a pressure sensitive adhesive layer and an additional layer having a release function arranged in contact with the pressure sensitive adhesive layer in order to temporarily protect the adhesion function of the pressure sensitive adhesive layer until the moment is actually activated. These additional layers, which are commonly referred to as "release liners", are designed so as to permit easy splitting from the pressure sensitive adhesive layer. Release liners for PSAs are known per se, and typically include a multilayer assembly (release liner base) provided or not with an additional release agent layer meant to be in contact with the pressure sensitive adhesive layer. Exemplary liners are described e.g. in US-A1-2010/0003441 (Nonaka et al.), US 5,167,995 (Johnson et al.), or in GB 1,315,516.

In some technical applications, release liners are required to fulfill a large variety of technically demanding requirements, in particular a combination of very particular mechanical properties. In the automotive industry for example, liners are typically required to conform to critical topologies, such as e.g. uneven or curved surfaces, and to provide convenient and efficient splitting from the pressure sensitive adhesive tape under challenging conditions. This is in particular the case in such tape applications where release liner sealed adhesive tapes are used to bond two structural parts (e.g. car body parts), whereby the two parts are initially pre-attached by mechanical means to ensure proper alignment, and wherein the release liner (which is still sealing the adhesive tape) is meant to be manually removed from the adhesive layer in a second stage to secure adhesive bonding between the two structural parts. In those tape application processes, the release liner is critically positioned between a first structural part and the pressure sensitive adhesive layer of the second taped structural part, and is typically subjected to high stress at the time of removal since the gap between the taped first structural part and the second part is typically very narrow. In addition, many structural parts used in the car manufacturing industry are typically made out of plastic material in molding machines, and they are often undesirably provided with sharp noses and edges. These defects may cause standard liners (i.e. non tear-resistant liners) to break prematurely, which in turn may cause substantial disruptions in production lines. Premature or undesirable breakage of the release liner may also be caused by too strong of an adhesive bonding between the release liner and the pressure sensitive adhesive tape, in particular when used with the so-called high performance pressure sensitive adhesive tapes, and more in particular when the release liner is not provided with a release coating layer.

The release liners known in the art for use with pressure sensitive adhesive tapes do not provide industrially viable solutions for the production of pressure sensitive adhesive tape assemblies having acceptable characteristics, in particular tensile strength.

Without contesting the technical advantages associated with the release liners known in the art for producing pressure sensitive adhesives tape assemblies, there is still a need for a pressure sensitive adhesive assembly comprising a release liner provided with an excellent and versatile balance of mechanical properties, in particular tensile strength and elongation.

Other advantages of the methods of the invention will be apparent from the following description.

### Summary

Disclosed herein is a pressure sensitive adhesive tape assembly comprising:
a) a first pressure sensitive adhesive layer, and
b) a release liner having a maximum tensile strength of at least 30N/8mm, when measured at a speed of 3000mm/min according to the tensile strength test method described in the experimental section, and wherein the release liner is a three layered film layer comprising an inner layer and two outer layers, wherein the inner layer comprises a polymeric material selected from the group consisting of polyesters, polyamides, and any combinations, copolymers or mixtures thereof, and wherein at least one outer layer comprises a polymeric material selected from the group of polyolefins, in particular a polyolefin selected from the group consisting of ultra low density, low density and linear low density polyethylene.

Also disclosed herein is a composite assembly comprising a substrate and a pressure sensitive adhesive tape assembly as above described applied onto at least part of the surface of the substrate.

According to one aspect of the present invention, it is provided a method of adhesively bonding a first and a second substrate, which comprises the steps of:
a) providing a pressure sensitive adhesive tape assembly as above described;
b) exposing one outer surface of the first (or second) pressure sensitive adhesive layer for adhesive bonding, whereby the opposite outer surface of the first (or second) pressure sensitive adhesive layer is bonded to the release liner;
c) adhesively bonding the outer surface of the first (or second) pressure sensitive adhesive layer which is exposed for adhesive bonding to the first substrate;
d) pre-attaching the composite assembly obtained in step c) to the second substrate, preferably my mechanical means,
e) optionally, pulling-off at least part of the release liner which is bonded the opposite outer surface of the first (or second) pressure sensitive adhesive layer so as to expose at least part of the opposite outer surface of the first (or second) pressure sensitive adhesive layer;
f) optionally, adhesively bonding the exposed part of the opposite outer surface of the first (or second) pressure sensitive adhesive layer to the second substrate;
g) pulling-off the release liner or the remaining part of the release liner; and
h) adhesively bonding the exposed part of the opposite outer surface of the first (or second) pressure sensitive adhesive layer to the second substrate.

In another aspect, the present invention relates to the use of a pressure sensitive adhesive tape assembly as above described, for exterior and interior parts attachment, taped seal on body, taped seal on door, and weather-strip tape applications for the automotive industry.

### Detailed description

The pressure sensitive adhesive (PSA) tape assembly comprises:
a) a first pressure sensitive adhesive layer, and
b) a release liner having a maximum tensile strength of at least 30N/8mm, when measured at a speed of 3000 mm/min according to the tensile strength test method described in the experimental section.

It has surprisingly been found that a pressure sensitive adhesive tape assembly as described above is outstandingly suitable for bonding parts/substrates, such as e.g. car body parts, under challenging and/or critical conditions, in particular when the release liner is subjected to high mechanical stress at the time of removal. It has in particular been found that a release liner having a maximum tensile strength of at least 30N/8mm, when measured at a speed of 3000 mm/min according to the tensile strength test method described in the experimental section, provides an excellent and versatile balance of mechanical properties, in particular tensile strength and elongation, and is ideally suitable for use with a pressure sensitive adhesive layer.

The pressure sensitive adhesive tape assembly is particularly suitable for automotive applications, and may find particular use for the manually operated bonding of exterior and interior parts of an automotive.

The composition and structure of the release liner for use herein is not particularly limited. Various compositions and structures may be envisaged for use herein, as long as the release liner has a maximum tensile strength of at least 30N/8mm, when measured at a speed of 3000 mm/min according to the tensile strength. Suitable compositions and structures for the release liner may be easily identified by those skilled in the art, in the light of the present disclosure.

The release liner for use herein comprises a polymeric material. The release liner for use herein comprises a polymeric material selected from the group consisting of polyolefins, polyesters, polyamides, and any combinations, copolymers or mixtures thereof.

Polyolefins for use herein may be advantageously selected from the group consisting of ultra low density, low density, linear low density, medium density, or high density polyethylene, polypropylene, polybutylene, polybutene-1, poly-3-methylbutene-1, poly-pentene-1 poly-4-methylpentene-1, polyisobutylene, polyhexene, ethylene-propylene copolymers; ethylene-butene copolymers; ethylene-pentene copolymers; ethylene-hexene copolymers; ethylene-propylene-diene copolymers, acrylonitrilebutadiene-styrene polymers, copolymers of olefins with vinyl acetate, and any combinations, copolymers or mixtures thereof.

According to a preferred aspect, the release liner comprises a polyolefin which is selected from the group consisting of low density polyethylene, polypropylene, and any combinations, copolymers or mixtures thereof.

In another preferred aspect, the release liner comprises a polyamide selected from the group consisting of poly(hexamethylene adipamide), poly(hexamethylene sebacamide), poly(heptamethylene pimelamide), poly(octamethylene suberamide), poly(hexamethylene azelamide), poly(nonamethylene azelamide), poly(decamethylene azelamide), poly(4aminobutyric acid), poly(6-aminohexanoic acid) poly(7-aminoheptanoic acid), poly(8-aminoocatanoic acid), poly(9-aminononanoic acid), poly(1 O-aminodecanoic acid), poly(ll - aminoundecanoic acid), poly(1 2-aminododecanoic acid, caprolactam/hexamethylene adipamide copolymer, hexamethylene adipamide/caprolactam copolymer, trimethylene adipamide/hexamethylene azelaiamide copolymer, hexamethylene adipamide/hexamethyleneazelaiamide/caprolactam copolymer, poly(caprolactam), poly(hexamethylene adipamide), poly(hexamethylene isophthalamide), poly(2,2,2-trimethyl hexamethylene terephthalamide), poly(m-xylylene adipamide), poly(p-xylylene adipamide), poly(hexamethylene terephthalamide), poly(dodecamethylene terephthalamide) and mixtures thereof.

According to still another preferred aspect, the release liner for use herein comprises a polyester which is preferably selected to comprise polyethylene terephthalate.

The release liner for use herein takes the form of a film layer.

According to the present invention, the release liner is a multilayered film.

More particularly, the release liner for use herein is a three layered film layer comprising a inner layer and two outer layers, wherein the inner layer comprises a polymeric material selected from the group consisting of polyesters, polyamides, and any combinations, copolymers or mixtures thereof; and wherein at least one outer layer comprises a polymeric material selected from the group of polyolefins, in particular a polyolefin selected from the group consisting of ultra low density, low density and linear low density polyethylene, more in particular low density polyethylene. In an advantageous execution, the two outer layers have identical compositions.

According to one particularly preferred execution, the inner layer comprises a polymeric material selected from the group consisting of polyamides, and the outer layer(s) comprise a polymeric material selected from the group of polyolefins, particular low density polyethylene. One exemplary release liner according to this particular execution is commercially available from Huhtamaki under tradename LPDE 74928 or LPDE 74930.

According to another particularly preferred execution, the inner layer comprises a polymeric material selected from the group consisting of polyesters, in particular polyethylene terephthalate; and the outer layer(s) comprise a polymeric material selected from the group of polyolefins, in particular low density polyethylene. One exemplary release liner according to this particular execution is commercially available from Loparex under tradename Loparex Film Plus 111 series.

The pressure sensitive adhesive tape assembly may advantageously comprise an adhesion-promoter layer arranged between the inner layer and at least one of the outer layers. Any adhesion-promoter layer commonly known in the art may be use in the context of the present disclosure. Suitable adhesion-promoter layers and corresponding compositions may be easily identified by those skilled in the art, in the light of the present disclosure.

In a particular aspect, the adhesion-promoter layer for use may comprise modified thermoplastic olefin homo- or copolymers of α,β-unsaturated olefins having 2 to 10 carbon atoms, in particular low density polyethylene, high density polyethylene, polypropylene, polybutylene, polyisobutylene, or any combinations and mixtures thereof.

According to a preferred aspect of the pressure sensitive adhesive tape assembly, the release liner for use herein has a maximum tensile strength of at least 35N/8mm, at least 40N/8mm, at least 45N/8mm, at least 50N/8mm, at least 60N/8mm, at least 70N/8mm, at least 80N/8mm, at least 90N/8mm, or even at least 100N/8mm when measured at a speed of 3000 mm/min according to the tensile strength test method described in the experimental section. Release liners having such excellent maximum tensile strength values are particularly robust and tear-resistant during application usage, in particular during any manually operated removal of the release liner. More robust release liners substantially reduce the occurrence of premature or undesirable breakage of the release liner, which may cause disruptions in production lines.

According to another preferred aspect, the release liner for use herein has a maximum elongation of at least 100%, at least 200%, at least 300%, or even at least 400% when measured at a speed of 3000mm/min according to the elongation test method described in the experimental section. Release liners having such advantageous maximum tensile strength values provide particularly good handleability and flexibility, which in turn beneficially impacts the pulling-off operation, in particular the manually operated removal of the release liner.

In an advantageous execution, the release liner for use herein has an overall thickness comprised between 40 µm and 500 µm, between 50 µm and 400 µm, between 70 µm and 300 µm, between 70 µm and 200 µm, between 70 µm and 150 µm, between 100 µm and 300 µm, or even between 150 µm and 250 µm.

According to another advantageous aspect, the inner layer has a thickness comprised between 10 µm and 250 µm, between 20 µm and 200 µm, between 25 µm and 150 µm, between 30 µm and 100 µm, between 40 µm and 80 µm, between 50 µm and 250 µm, between 80 µm and 200 µm, or even between 100 µm and 200 µm.

According to still another advantageous aspect, the outer layer(s) have a thickness comprised between 5 µm and 100 µm, between 5 µm and 80 µm, between 10 µm and 60 µm, between 10 µm and 50 µm, between 15 µm and 40 µm, or even between 15 µm and 30 µm.

In a less advantageous aspect, the release liner for use herein may further comprise a reenforcing material which is preferably selected from the group of fibers, filaments, and any combinations or mixtures thereof. Any reinforcing material commonly known for use in polymeric matrices may be used in the context of the present disclosure. Suitable reinforcing materials for use herein may be easily identified those skilled in the art, in the light of the present disclosure.

Exemplary reinforcing materials comprise, but are not limited to, natural, organic or inorganic material preferably selected from the group consisting of glass, hemp, kenaf, sisal, coal, silk, viscose, E-glass, liquid crystal polymers, polyethylene, polypropylene, UHMW-polyethylene, polyester, polyamide, aramid, carbon, nylon, rayon, polybenzimidazole, poly(m-phenylene-isophthalamide), poly(p-phenylene-terephthalamide, polyamide-hydrazide, and any combinations or mixtures thereof. In a particular aspect, the reinforcing material is selected from the group of glass fibers.

The pressure sensitive adhesive tape assembly further comprises a first pressure sensitive adhesive layer. Suitable pressure sensitive adhesive layers for use herein are not particularly limited, and may be easily identified by those skilled in the art, in the light of the present disclosure.

According to a preferred execution of the pressure sensitive adhesive tape assembly, the first pressure sensitive adhesive layer is a polymeric foam layer comprising a polymer base material.

In the context of the present disclosure, the term "polymeric foam" is meant to designate a material based on a polymer and which material comprises voids, typically in an amount of at least 5% by volume, typically from 10% to 55% by volume or from 10% to 45% by volume. The voids may be obtained by any of the known methods such as cells formed by gas. Alternatively, the voids may result from the incorporation of hollow fillers, such as hollow polymeric particles, hollow glass microspheres or hollow ceramic microspheres.

A polymeric foam layer for use herein has for example a thickness comprised between 100 and 6000 µm, between 200 and 4000 µm, between 500 and 2000 µm, or even between 800 and 1500 µm. As will be apparent to those skilled in the art, in the light of the present description, the preferred thickness of the polymeric foam layer will be dependent on the intended application.

A polymeric foam layer typically has a density comprised between 0.45 g/cm³ and 1.5 g/cm³, between 0.45 g/cm³ and 1.10 g/cm³, between 0.50 g/cm³ and 0.95 g/cm³, between 0.60 g/cm³ and 0.95 g/cm³, or even between 0.70 g/cm³ and 0.95 g/cm³. This density is achieved by including voids or cells. Typically, the polymeric foam layer will comprise at least 5% of voids by volume and for example between 15 and 45 %, or between 20% and 45% by volume.

The voids or cells in the polymeric foam layer can be created in any of the known manners described in the art and include the use of a gas or blowing agent and/or including hollow particles into the composition for the polymeric foam layer. For example, according to one method to create a polymeric foam described in US 4,415,615, an acrylic foam can be obtained by the steps of (i) frothing a composition containing the acrylate monomers and optional comonomers, (ii) coating the froth on a backing and (iii) polymerizing the frothed composition. It is also possible to coat the unfrothed composition of the acrylate monomers and optional comonomers to the backing and to then simultaneously foam and polymerize that composition. Frothing of the composition may be accomplished by whipping a gas into the polymerizable composition. Preferred gasses for this purpose are inert gasses such as nitrogen and carbon dioxide, particularly if the polymerization is photoinitiated.

Advantageously, the polymer base material for use herein is selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, halogenated polymers and any combinations, copolymers or mixtures thereof.

In one preferred aspect, the main monomer component of the polymer base material is selected from the group consisting of (meth)acrylate esters, (meth)acrylate monoesters of polyhydroxy alkyl alcohols, multifunctional (meth)acrylate esters, macromeric (meth)acrylates, (meth)acrylic acids and their salts, nitrogen-bearing monomers, dibasic acid monomers, vinyl esters, styrenes and ring-substituted styrenes, vinyl halides and vinylidene halides, vinyl ethers, and any combinations or mixtures thereof.

In a still preferred aspect, the polymer base material is selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms.

Preferably still, the polymer base material for use herein is selected from the group consisting of polyacrylates whose main monomer component comprises a linear or branched alkyl (meth)acrylate ester selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

According to a very preferred execution, the polymer base material selected from the group consisting of polyacrylates whose main monomer component is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate. More preferably, the polymer base material for use herein is selected from the group consisting of polyacrylates whose main monomer component is selected from the group consisting of 2-ethylhexyl acrylate, and iso-octyl acrylate.

According to the advantageous aspect whereby the first pressure sensitive adhesive layer is a polymeric foam layer, the latter may further comprise a filler material which is preferably selected from the group consisting of filler particles, in particular expanded perlite, microspheres, expendable and expanded microspheres, glassbeads, glass microspheres, silica type fillers, hydrophobic silica type fillers, hydrophilic silica type fillers, hydrophobic fumed silica, hydrophilic fumed silica, fibres, electrically and/or thermally conducting particles, nanoparticles, in particular silica nanoparticles, and any combinations or mixtures thereof. In a preferred aspect, the particulate filler material comprises hollow glass microspheres.

According to a particular aspect, the pressure sensitive adhesive tape assembly further comprises a second pressure sensitive adhesive layer arranged on at least one outer surface of the first pressure sensitive adhesive layer. Suitable pressure sensitive adhesive layers for use herein are not particularly limited, and may be easily identified by those skilled in the art, in the light of the present disclosure. Advantageously, the second pressure sensitive adhesive layer may be arranged between the first pressure sensitive adhesive layer and the release liner.

According to a preferred execution of the pressure sensitive adhesive tape assembly, the second pressure sensitive adhesive layer comprises a polymeric material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

In a preferred aspect of the pressure sensitive adhesive tape assembly, the second pressure sensitive adhesive layer comprises a polymeric material selected from the group consisting of polyacrylates, synthetic rubbers, and any combinations, copolymers or mixtures thereof.

According to one preferred aspect, the polymeric material used for manufacturing the second pressure sensitive adhesive layer is selected from the group consisting of polyacrylates whose main monomer component preferably comprises a linear or branched alkyl (meth)acrylate ester, preferably a non-polar linear or branched alkyl (meth)acrylate ester having a linear or branched alkyl group comprising preferably from 1 to 32, from 1 to 20, or even from 1 to 15 carbon atoms. More preferably, the polymeric material is selected from the group consisting of synthetic rubbers, in particular from the group consisting of halogenated butyl rubbers, in particular bromobutyl rubbers and chlorobutyl rubbers; halogenated isobutylene-isoprene copolymers; bromo-isobutylene-isoprene copolymers; chloro-isobutylene-isoprene copolymers; block copolymers; olefinic block copolymers; butyl rubbers; synthetic polyisoprene; ethylene-octylene rubbers; ethylene-propylene rubbers; ethylene-propylene random copolymers; ethylene-propylene-diene monomer rubbers; polyisobutylenes; poly(alpha-olefin); ethylene-alpha-olefin copolymers; ethylene-alpha-olefin block copolymers; styrenic block copolymers; styreneisoprene-styrene block copolymers; styrene-butadiene-styrene block copolymers; styrene-ethylene/butadiene-styrene block copolymers; styrene-ethylene/propylene-styrene block copolymers; styrene-butadiene random copolymers; olefinic polymers and copolymers; ethylene-propylene random copolymers; ethylene-propylene-diene terpolymers, and any combinations, copolymers or mixtures thereof.

According to another preferred aspect of the pressure sensitive adhesive tape assembly, the polymeric material used for manufacturing the second pressure sensitive adhesive layer is selected from the group consisting of linear block copolymers, multi-arm block copolymers, and any combinations, copolymers or mixtures thereof. More preferably, the polymeric material is selected from the group consisting of multi-arm block copolymers, in particular star block copolymers, more in particular polymodal, asymmetric star block copolymers.

In an advantageous aspect, the multi-arm block copolymer comprises a conjugated diene selected from the group consisting of isoprene, butadiene, ethylene butadiene copolymers, and combinations thereof; and/or a monovinyl aromatic monomer selected from the group consisting of styrene, styrene-compatible blends, and combinations thereof.

According to still another advantageous aspect, the polymeric material is selected from the group consisting of linear block copolymers comprising a conjugated diene selected from the group consisting of isoprene, butadiene, ethylene butadiene copolymers, and combinations thereof; and/or a mono vinyl aromatic monomer selected from the group consisting of styrene, styrene-compatible blends, and combinations thereof. More advantageously, the linear block copolymers are selected from the group consisting of styrene- isoprene-styrene, styrene-butadiene-styrene, styrene-ethylene-butadiene-styrene, and combinations thereof.

According to a specific execution of of the pressure sensitive adhesive tape assembly, the second pressure sensitive adhesive layer for use herein is as described in WO2008/073669A1 (Hanley et al.).

Accordingly, in one specific aspect, the second pressure sensitive adhesive layer for use herein comprises:
(a) a linear block copolymer of the formula R - (G)ₘ, wherein m is 1 or 2;
(b) a multi-arm block copolymer of the formula Qₙ-Y, wherein:
   (i) Q represents an arm of the multi-arm block copolymer and each arm independently has the formula G-R;
   (ii) n represents the number of arms and is a whole number of at least 3; and
   (iii) Y is the residue of a multifunctional coupling agent; wherein each R is a rubbery block comprising a polymerized conjugated diene, a hydrogenated derivative of a polymerized conjugated diene, or combinations thereof; and each G is a glassy block comprising a polymerized monovinyl aromatic monomer;
(c) a first high Tg tackifier having a Tg of at least 60°C, wherein the first high Tg tackifier is primarily compatible with the rubbery blocks;
(d) a second high Tg tackifier having a Tg of at least 60 degrees C, wherein the second high Tg tackifier is primarily compatible with the glassy blocks; and
(e) at least one component selected from the group consisting of a low Tg tackifier, a plasticizer, and combinations thereof.

In the present context, and as fully described in WO2008/073669A1 (Hanley et al.), the term "high Tg tackifier" refers to a tackifier having a glass transition temperature of at least 60°C. The term "low Tg tackifier" refers to a tackifier having a glass transition temperature of less than 60°C. The Tg values may be determined by any methods known to the skilled person, for example differential scanning calorimetry (DSC) or dynamic mechanical thermal analysis (DMTA) according to DIN EN ISO 6721-3, from which the latter is used in the present context.

In some executions, the first and/or the second pressure sensitive adhesive layer may further comprise one or more tackifiers. Tackifiers (i.e., tackifying agents or tackifying resins) and plasticizers (i.e., plasticizing agents) are often added to modulate the T_{g}, modulate the storage modulus, and to alter the tackiness of the pressure-sensitive adhesive.

Any tackifiers that are included in the particular pressure-sensitive adhesive compositions are typically selected to be miscible with the polymerizable material. Any tackifier typically included in conventional pressure-sensitive adhesive compositions may be used. Either solid or liquid tackifiers can be added. Solid tackifiers generally have a number average molecular weight (Mw) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired.

In an advantageous aspect, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

In some executions, the first and/or the second pressure sensitive adhesive layer may further comprise one or more plasticizers. Suitable plasticizers include, but are not limited to, various polyalkylene oxides (e.g., polyethylene oxides or propylene oxides), adipic acid esters, formic acid esters, phosphoric acid esters, benzoic acid esters, phthalic acid esters, and sulfonamides, or naphthenic oils.

In a particular aspect, the first and/or the second pressure sensitive adhesive layer may further comprise a crosslinker (also referred to as crosslinking agent).

The crosslinker often increases the cohesive strength and the tensile strength of the polymerizable material. The crosslinker can have at least two functional groups which are capable of polymerizing with the first monomer or another monomer. That is, the crosslinker can have at least two ethylenically unsaturated groups. Suitable crosslinkers often have multiple (meth)acryloyl groups. Alternatively, the crosslinker can have at least two groups that are capable of reacting with various functional groups (i.e., functional groups that are not ethylenically unsaturated groups) on another monomer. For example, the crosslinker can have multiple groups that can react with functional groups such as acidic groups on other monomers.

Crosslinkers with multiple (meth)acryloyl groups can be di(meth)acrylates, tri(meth)acrylates, tetra(meth)acrylates, penta(meth)acrylates, and the like. These crosslinkers can be formed, for example, by reacting (meth)acrylic acid with a polyhydric alcohol (i.e., an alcohol having at least two hydroxyl groups). The polyhydric alcohol often has two, three, four, or five hydroxyl groups. Mixtures of crosslinkers may also be used.

In many aspects, the crosslinkers contain at least two (meth)acryloyl groups. Exemplary crosslinkers with two acryloyl groups include, but are not limited to, 1,2-ethanediol diacrylate, 1,3-propanediol diacrylate, 1,9-nonanediol diacrylate, 1,12-dodecanediol diacrylate, 1,4-butanediol diacrylate, 1,6-hexanediol diacrylate, butylene glycol diacrylate, bisphenol A diacrylate, diethylene glycol diacrylate, triethylene glycol diacrylate, tetraethylene glycol diacrylate, tripropylene glycol diacrylate, polyethylene glycol diacrylate, polypropylene glycol diacrylate, polyethylene/polypropylene copolymer diacrylate, polybutadiene di(meth)acrylate, propoxylated glycerin tri(meth)acrylate, and neopentylglycol hydroxypivalate diacrylate modified caprolactone.

Exemplary crosslinkers with three or four (meth)acryloyl groups include, but are not limited to, trimethylolpropane triacrylate (e.g., commercially available under the trade designation TMPTA-N from Cytec Industries, Inc., Smyrna, GA and under the trade designation SR-351 from Sartomer, Exton, PA), pentaerythritol triacrylate (e.g., commercially available under the trade designation SR-444 from Sartomer), tris(2-hydroxyethylisocyanurate) triacrylate (e.g., commercially available under the trade designation SR-368 from Sartomer), a mixture of pentaerythritol triacrylate and pentaerythritol tetraacrylate (e.g., commercially available from Cytec Industries, Inc., under the trade designation PETIA with an approximately 1:1 ratio of tetraacrylate to triacrylate and under the trade designation PETA-K with an approximately 3:1 ratio of tetraacrylate to triacrylate), pentaerythritol tetraacrylate (e.g., commercially available under the trade designation SR-295 from Sartomer), di-trimethylolpropane tetraacrylate (e.g., commercially available under the trade designation SR-355 from Sartomer), and ethoxylated pentaerythritol tetraacrylate (e.g., commercially available under the trade designation SR-494 from Sartomer). An exemplary crosslinker with five (meth)acryloyl groups includes, but is not limited to, dipentaerythritol pentaacrylate (e.g., commercially available under the trade designation SR-399 from Sartomer).

In some aspects, the crosslinkers are polymeric material that contains at least two (meth)acryloyl groups. For example, the crosslinkers can be poly(alkylene oxides) with at least two acryloyl groups (e.g., polyethylene glycol diacrylates commercially available from Sartomer such as SR210, SR252, and SR603) or poly(urethanes) with at least two (meth)acryloyl groups (e.g., polyurethane diacrylates such as CN9018 from Sartomer). As the higher molecular weight of the crosslinkers increases, the resulting acrylic copolymer tends to have a higher elongation before breaking. Polymeric crosslinkers tend to be used in greater weight percent amounts compared to their non-polymeric counterparts.

Other types of crosslinkers can be used rather than those having at least two (meth)acryloyl groups. The crosslinker can have multiple groups that react with functional groups such as acidic groups on other second monomers. For example, monomers with multiple aziridinyl groups can be used that are reactive with carboxyl groups. For example, the crosslinkers can be a bis-amide crosslinker as described in US Patent 6,777,079 (Zhou et al.).

In other methods of crosslinking, photocrosslinkers (e.g., UV photocrosslinkers) are added. These photocrosslinkers can be copolymerizable with the various monomers used to form the elastomeric material (e.g., copolymerizable benzophenones) or can be added after polymerization. Suitable photocrosslinkers added after polymerization include, for example, multifunctional benzophenones, triazines (such as XL-330, which is 2,4,-bis(trichloromethyl)-6-(4-methoxyphenyl)-triazine from 3M Company, Saint Paul, MN), acetophenones, and the like.

In still other methods of crosslinking, thermal crosslinkers may be used, optionally in combination with suitable accelerants and retardants. Suitable thermal crosslinkers for use herein include, but are not limited to, isocyanates, more particularly trimerized isocyanates and/or sterically hindered isocyanates that are free of blocking agents, or else epoxide compounds such as epoxide-amine crosslinker systems. Advantageous crosslinker systems and methods are described e.g. in the descriptions of DE 202009013255 U1, EP 2 305 389 A1, EP 2 414 143 A1, EP 2 192 148 A1, EP 2 186 869 A1, EP 0 752 435 A1, EP 1 802 722 A1, EP 1 791 921 A1, EP 1 791 922 A1, EP 1 978 069 A1, and DE 10 2008 059 050 A1. Particularly advantageous crosslinker systems and methods are described in EP 0 752 435 A1 and EP 1 978 069 A1. Suitable accelerant and retardant systems for use herein are described e.g. in the description of US-A1-2011/0281964. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

If present, a crosslinker can be used in any suitable amount. In many aspects, the crosslinker is present in an amount of up 5 parts by weight based on a total weight of polymerizable material. In some aspects, the crosslinker is present in an amount in a range of 0 to 5 weight percent, 0.01 to 5 weight percent, 0.05 to 5 weight percent, 0 to 3 weight percent, 0.01 to 3 weight percent, 0.05 to 3 weight percent, 0 to 1 weight percent, 0.01 to 1 weight percent, or 0.05 to 1 weight percent.

Aside from thermal, moisture or photosensitive crosslinking agents, crosslinking may also be achieved using high energy electromagnetic radiation such as gamma or e-beam radiation.

In a particular aspect of the pressure-sensitive adhesive assembly, the first pressure sensitive adhesive layer and/or the second pressure sensitive adhesive layer comprise a (further) filler material.

Any filler material commonly known to those skilled in the art may be used. Typical examples of filler material that can be used herein include, but are not limited to, those selected from the group consisting of expanded perlite, microspheres, expandable microspheres, ceramic spheres, zeolites, clay fillers, glass beads, hollow inorganic beads, silica type fillers, hydrophobic silica type fillers, hydrophilic silica type fillers, fumed silica, fibres, in particular glass fibers, carbon fibers, graphite fibers, silica fibers, ceramic fibers, electrically and/or thermally conducting particles, nanoparticles, in particular silica nanoparticles, and any combinations thereof.

As will be apparent to those skilled in the art, other additives may optionally be included in any layer of the pressure sensitive adhesive assembly to achieve any desired properties. Such additives, include pigments, tackifiers, toughening agents, reinforcing agents, fire retardants, antioxidants, and various stabilizers. The additives are added in amounts sufficient to obtain the desired end properties.

According to an advantageous aspect, the pressure sensitive adhesive tape assembly further comprises a release coating on at least one outer surface of the release liner, and preferably on one outer surface of the release liner in contact with the first pressure sensitive adhesive layer or the second pressure sensitive adhesive layer.

Any release coating commonly known in the art may be used. Suitable release coatings for use herein may be easily identified by those skilled in the art.

In a preferred aspect of the pressure sensitive adhesive tape assembly, the release coating for use herein comprises a release agent which is preferably selected from the group consisting of fluoropolymers, silicones, chromium complexes of long chain fatty acids, polysiloxane, and any combinations or mixtures thereof.

Disclosed herein is a composite assembly comprising a substrate and a pressure sensitive adhesive tape assembly, as above-described, applied onto at least part of the surface of the substrate. Substrates for use herein are not particularly limited.

Suitable substrates for use herein may be selected from the group of straight substrates, curved substrates, bended substrates, twisted substrates, angled substrates, arched substrates, arced substrates, and any combinations thereof. Suitable materials for forming the substrates for use herein are not particularly limited. Exemplary main materials used for forming substrates are typically selected from the group consisting of metals, plastics, reinforced plastics, rubbers, composite materials, glass materials, clear coats, wood, coatings, and any combinations thereof.

According to a preferred aspect of the composite assembly, the substrate is an automotive part, in particular an exterior part, an interior part or a body part of an automotive. Exemplary automotive substrates include, but are not limited to, cladding parts, sealing parts, seals on body, seals on door, door side panels, exterior door panels, spoilers, exterior trims, drip rail seals, sun roof seals, waterboxes, seals on hood, wheel arch trims, body side mouldings, lower door trims, pillar trims, rear mirror assemblies, licence plate brackets, grilles, antennas, side windows, and weather-strips.

One aspect of the present invention is directed to a method of adhesively bonding a first and a second substrate, which comprises the steps of:
a) providing a pressure sensitive adhesive tape assembly as above described;
b) exposing one outer surface of the first or second pressure sensitive adhesive layer for adhesive bonding, whereby the opposite outer surface of the first or second pressure sensitive adhesive layer is bonded to the release liner;
c) adhesively bonding the outer surface of the first or second pressure sensitive adhesive layer which is exposed for adhesive bonding to the first substrate;
d) pre-attaching the composite assembly obtained in step c) to the second substrate, preferably my mechanical means,
e) optionally, pulling-off at least part of the release liner which is bonded the opposite outer surface of the first or second pressure sensitive adhesive layer so as to expose at least part of the opposite outer surface of the first or second pressure sensitive adhesive layer;
f) optionally, adhesively bonding the exposed part of the opposite outer surface of the first or second pressure sensitive adhesive layer to the second substrate;
g) pulling-off the release liner or the remaining part of the release liner; and
h) adhesively bonding the exposed part of the opposite outer surface of the first or second pressure sensitive adhesive layer to the second substrate.

According to an advantageous aspect, the method as described above further comprises the step of applying a flap to the release liner so as to facilitate the pulling-off of the release liner, wherein the flap is preferably applied by heat tabbing.

According to a preferred aspect of the method as described above, the first and/or the second substrate is an automotive part, in particular an exterior part, an interior part or a body part of an automotive. Exemplary automotive substrates include, but are not limited to, cladding parts, sealing parts, seals on body, seals on door, door side panels, exterior door panels, spoilers, exterior trims, drip rail seals, sun roof seals, waterboxes, seals on hood, wheel arch trims, body side mouldings, lower door trims, pillar trims, rear mirror assemblies, licence plate brackets, grilles, antennas, side windows, and weather-strips.

Another aspect of the invention is the use of a method as above described, for exterior and interior parts attachment, taped seal on body, taped seal on door, and weather-strip tape applications for the automotive industry.

Disclosed herein is the use of a release liner as described above in combination with a pressure sensitive adhesive layer, in particular in combination with a pressure sensitive adhesive foam tape.

### EXAMPLES

The invention is further illustrated by the following examples. These examples are merely for illustrative purposes only and are not meant to be limiting on the scope of the appended claims.

### Test Methods applied:

### Tensile strength and maximum elongation at a speed of 3000mm/min.

The maximum tensile strength and the maximum elongation of the release liner are measured at the same time during pulling of the release liner. The force required to pull the release liner and the length of the liner until the sample breaks are measured. The maximum tensile strength and the maximum elongation of the release liner are determined on type 2 test specimens (rectangular test strips, 150 mm in length and 8 mm in width) in accordance with DIN EN ISO 527-3/2/300 (DIN 53 455) using a test speed of 3000 mm/min and a minimum clamp distance of 50 mm. The test samples are cut to size using sharp blades and are tested in a Zwick tensile tester. The force (tensile strength) is expressed in N/strip width, i.e. in N/8mm. The maximum elongation is determined in machine direction (MD, direction of running). The maximum elongation is expressed in %.

### Starting products:

In the examples, the following raw materials are used:
**LDPE Film Q74928:** multilayer film comprising a polyamide layer sandwiched between two LDPE layers and having an overall thickness of 200 µm, commercially available from Huhtamaki Films Germany GmbH & Co. KG.
**Loparex Film Plus 111 series:** multilayer film comprising a PET layer sandwiched between two LDPE layers having an overall thickness of 100 µm, commercially available from Loparex BV, The Netherlands.
**3M-SC12:** multilayer film comprising pure polyethylene PE having an overall thickness of 100 µm, obtained from the 3M Company, USA.
**3M-TLR:** multilayer film comprising polyethylene PE having an overall thickness of 140 µm, obtained from 3M Japan, Japan.
**Mondi HDPE Liner 85:** multilayer film comprising pure polyethylene PE having an overall thickness of 85 µm, commercially available from Mondi Release Liner Austria GmbH, Austria.
**GTE 6215:** acrylic foam tape, commercially available from 3M Deutschland GmbH, Germany.

### Preparation of cladding assembly:

A cladding car part in the form of a plastic car body attachment part (round arches) is used for the testing. The cladding part is 100 cm in length and 5 cm in width, and is provided with two main surfaces. One main surface is surface treated by corona treatment and cleaned by dry wiping. Two strips of commercially available 3M acrylic foam tapes GTE 6215 are adhesively bonded to the surface-treated surface of the cladding car part along the two longitudinal extremities. The acrylic foam tape strips are adhesively bonded to the cladding part on the non liner side. The other side of the acrylic foam tape strips is provided with a release liner according to the present disclosure. The extremities of the two release liners are heat tabbed with suitable tabbing tapes using standard heat sealing procedure (160°C with a contact/melting time of 2 seconds) to facilitate the manually-applied pulling-off operation . The cladding assembly is ready to attach onto the corresponding car body.

### Test Results:

### Tensile strength at a speed of 3000mm/min results

The tensile strength values of three comparative films (SC12, TLR and Mondi), as well as of two films according to the present disclosure (Huhtamaki LDPE Q74928 and Loparex) are shown in Table 1 below.

**Table 1**

| Film | Tensile strength value (N/8mm) | Type |
|---|---|---|
| Huhtamaki | 40 | according to disclosure |
| Loparex | 103 | according to disclosure |
| SC12 | 23 | comparative |
| TLR | 28 | comparative |
| Mondi | 15 | comparative |

### Maximum elongation results

The maximum elongation values of three comparative films (SC12, TLR and Mondi), as well as of two films according to the present disclosure (Huhtamaki and Loparex) are shown in Table 2 below.

**Table 2**

| Film | Maximum elongation value (%) | Type |
|---|---|---|
| Huhtamaki | 476 | according to disclosure |
| Loparex | 164 | according to disclosure |
| SC12 | 646 | comparative |
| TLR | 138 | comparative |
| Mondi | 247 | comparative |

### Bonding of cladding car part assembly

The cladding assembly as described above is mechanically pre-attached to the relevant corresponding part of a metallic car body (wheel arch). After placement, the two release liners according to the present disclosure are manually pulled-off without any breakage occurring. The cladding car part is then adhesively bonded to the relevant corresponding part of a metallic car body by applying gentle pressure.

Similar testing with 3M-SC12 and 3M-TLR release liners lead to premature breakage.

## Claims

1. A method of adhesively bonding a first and a second substrate, which comprises the steps of:
a) providing a pressure sensitive adhesive tape assembly comprising a first pressure sensitive layer and a release layer having a maximum tensile strength of at least 30N/8mm, when measured at a speed of 3000 mm/min according to the tensile strength test method described in the experimental section, and wherein the release liner is a three layered film layer comprising an inner layer and two outer layers, wherein the inner layer comprises a polymeric material selected from the group consisting of polyesters, polyamides, and any combinations, copolymers or mixtures thereof; and wherein at least one outer layer comprises a polymeric material selected from the group of polyolefins, in particular a polyolefin selected from the group consisting of ultra low density, low density and linear low density polyethylene;
b) exposing one outer surface of the first or second pressure sensitive adhesive layer for adhesive bonding, whereby the opposite outer surface of the first or second pressure sensitive adhesive layer is bonded to the release liner;
c) adhesively bonding the outer surface of the first or second pressure sensitive adhesive layer which is exposed for adhesive bonding to the first substrate;
d) pre-attaching the composite assembly obtained in step c) to the second substrate, preferably my mechanical means,
e) optionally, pulling-off at least part of the release liner which is bonded the opposite outer surface of the first or second pressure sensitive adhesive layer so as to expose at least part of the opposite outer surface of the first or second pressure sensitive adhesive layer;
f) optionally, adhesively bonding the exposed part of the opposite outer surface of the first or second pressure sensitive adhesive layer to the second substrate;
g) pulling-off the release liner or the remaining part of the release liner; and
h) adhesively bonding the exposed part of the opposite outer surface of the first or second pressure sensitive adhesive layer to the second substrate.

2. The method to claim 1, wherein the release liner has a maximum tensile strength of at least 35N/8mm, at least 40N/8mm, at least 45N/8mm, at least 50N/8mm, at least 60N/8mm, at least 70N/8mm, at least 80N/8mm, at least 90N/8mm, or even at least 100N/8mm when measured at a speed of 3000mm/min according to the tensile strength test method described in the experimental section.

3. The method according to claim 1 or 2, wherein the release liner has a maximum elongation of at least 100%, at least 200%, at least 300%, or even at least 400% when measured at a speed of 3000mm/min according to the elongation test method described in the experimental section.

4. The method according to any one of the preceding claims, wherein the release liner comprises a polyamide selected from the group consisting of poly(hexamethylene adipamide), poly(hexamethylene sebacamide), poly(heptamethylene pimelamide), poly(octamethylene suberamide), poly(hexamethylene azelamide), poly(nonamethylene azelamide), poly(decamethylene azelamide), poly(4aminobutyric acid), poly(6-aminohexanoic acid) poly(7-aminoheptanoic acid), poly(8-aminoocatanoic acid), poly(9-aminononanoic acid), poly(1O-aminodecanoic acid), poly(ll -aminoundecanoic acid), poly(12-aminododecanoic acid, caprolactam/hexamethylene adipamide copolymer, hexamethylene adipamide/caprolactam copolymer, trimethylene adipamide/hexamethylene azelaiamide copolymer, hexamethylene adipamide/hexamethyleneazelaiamide/caprolactam copolymer, poly(caprolactam), poly(hexamethylene adipamide), poly(hexamethylene isophthalamide), poly(2,2,2-trimethyl hexamethylene terephthalamide), poly(m-xylylene adipamide), poly(p-xylylene adipamide), poly(hexamethylene terephthalamide), poly(dodecamethylene terephthalamide) and mixtures thereof.

5. The method according to any one of the preceding claims, wherein the release liner comprises a polyester which is polyethylene terephthalate.

6. The method according to any one of the preceding claims, wherein at least one outer layer comprises a polymeric material selected from the group of low density polyethylene.

7. The method according to any of the preceding claims, wherein the first pressure sensitive adhesive layer is a polymeric foam layer comprising a polymeric base material, wherein the polymeric base material is preferably selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, halogenated polymers and any combinations, copolymers or mixtures thereof.

8. The method according to claim 7, which further comprises a second pressure sensitive adhesive layer arranged on at least one outer surface of the first pressure sensitive adhesive layer, wherein the second pressure sensitive adhesive layer is preferably arranged between the first pressure sensitive adhesive layer and the release liner.

9. The method according to claim 8, wherein the second pressure sensitive adhesive layer comprises a polymeric material selected from the group consisting of polyacrylates, polyurethanes, polyolefins, polyamines, polyamides, polyesters, polyethers, polyisobutylene, polystyrenes, polyvinyls, polyvinylpyrrolidone, natural rubbers, synthetic rubbers, and any combinations, copolymers or mixtures thereof.

10. The method according to claim 9, wherein the second pressure sensitive adhesive layer comprises a polymeric material selected from the group consisting of polyacrylates, synthetic rubbers, and any combinations, copolymers or mixtures thereof.

11. The method according to claim 10, wherein the polymeric material is selected from the group consisting of linear block copolymers, multi-arm block copolymers, and any combinations, copolymers or mixtures thereof.

12. The method according to any of claim 10 or 11, wherein the polymeric material is selected from the group consisting of multi-arm block copolymers, in particular star block copolymers, more in particular polymodal, asymmetric star block copolymers.

13. The method according to claim 12, wherein the substrate is an automotive exterior part, an interior part or a body part of an automotive.

14. Use of a method according to any one of the preceding claims for exterior and interior parts attachment, taped seal on body, taped seal on door, and weather-strip tape applications for the automotive industry.

## Patentansprüche

1. Ein Verfahren zum Verkleben eines ersten und eines zweiten Substrats, das die folgenden Schritte umfasst:
a) Bereitstellen einer druckempfindlichen Haftmittel-Bandanordnung, umfassend eine erste druckempfindliche Schicht und eine Trennschicht mit einer maximalen Zugfestigkeit von mindestens 30 N/8 mm, gemessen bei einer Geschwindigkeit von 3000 mm/min gemäß dem im Versuchsabschnitt beschriebenen Zugfestigkeitstestverfahren, und wobei die Trennschicht eine dreischichtige Folienschicht ist, umfassend eine Innenschicht und zwei Außenschichten, wobei die Innenschicht ein polymeres Material umfasst, das ausgewählt ist aus der Gruppe bestehend aus Polyestern, Polyamiden und beliebigen Kombinationen, Copolymeren oder Mischungen davon; und wobei mindestens eine Außenschicht ein polymeres Material umfasst, das ausgewählt ist aus der Gruppe der Polyolefine, insbesondere ein Polyolefin, das ausgewählt ist aus der Gruppe bestehend aus Polyethylen ultraniedriger Dichte, niedriger Dichte und linearer niedriger Dichte;
b) Freilegen einer Außenoberfläche der ersten oder zweiten druckempfindlichen Haftmittelschicht zum Verkleben, wobei die gegenüberliegende Außenoberfläche der ersten oder zweiten druckempfindlichen Haftmittelschicht mit der Trennschicht verbunden ist;
c) Verkleben der Außenoberfläche der ersten oder zweiten druckempfindlichen Haftmittelschicht, die zum Verkleben mit dem ersten Substrat freiliegt;
d) Vorbefestigen der in Schritt c) erhaltenen Verbundanordnung an das zweite Substrat, vorzugsweise mit mechanischen Mitteln,
e) optionales Abziehen mindestens eines Teils der Trennschicht, die mit der gegenüberliegenden Außenoberfläche der ersten oder zweiten druckempfindlichen Haftmittelschicht verbunden ist, um mindestens einen Teil der gegenüberliegenden Außenoberfläche der ersten oder zweiten druckempfindlichen Haftmittelschicht freizulegen;
f) optionales Verkleben des freiliegenden Teils der gegenüberliegenden Außenoberfläche der ersten oder zweiten druckempfindlichen Haftmittelschicht mit dem zweiten Substrat;
g) Abziehen der Trennschicht oder des verbleibenden Teils der Trennschicht; und
h) Verkleben des freiliegenden Teils der gegenüberliegenden Außenoberfläche der ersten oder zweiten druckempfindlichen Haftmittelschicht mit dem zweiten Substrat.

2. Das Verfahren nach Anspruch 1, wobei die Trennschicht eine maximale Zugfestigkeit von mindestens 35 N/8 mm, mindestens 40 N/8 mm, mindestens 45 N/8 mm, mindestens 50 N/8 mm, mindestens 60 N/8 mm, mindestens 70 N/8 mm, mindestens 80 N/8 mm, mindestens 90 N/8 mm oder sogar mindestens 100 N/8 mm aufweist, gemessen bei einer Geschwindigkeit von 3000 mm/min gemäß dem im Versuchsabschnitt beschriebenen Zugfestigkeitstestverfahren.

3. Das Verfahren nach Anspruch 1 oder 2, wobei die Trennschicht eine maximale Dehnung von mindestens 100 %, mindestens 200 %, mindestens 300 % oder sogar mindestens 400 % aufweist, gemessen bei einer Geschwindigkeit von 3000 mm/min gemäß dem im Versuchsabschnitt beschriebenem Dehnungstestverfahren.

4. Das Verfahren nach einem der vorstehenden Ansprüche, wobei die Trennschicht ein Polyamid umfasst, das ausgewählt ist aus der Gruppe bestehend aus Poly(hexamethylenadipamid), Poly(hexamethylensebacamid), Poly(heptamethylenpimelamid), Poly(octamethylensuberamid), Poly(hexamethylen-azelamid), Poly(nonamethylen-azelamid), Poly(decamethylen-azelamid), Poly(4-aminobuttersäure), Poly(6-aminohexansäure), Poly(7-aminoheptansäure), Poly(8-aminoocatansäure), Poly(9-aminononansäure), Poly(10-aminodecansäure), Poly(11-aminoundecansäure), Poly(12-aminododecansäure), Caprolactam/Hexamethylenadipamid-Copolymer, Hexamethylen-Adipamid/Caprolactam-Copolymer,
Trimethylenadipamid/Hexamethylenazelaiamid-Copolymer, Hexamethylenadipamid/Hexamethylenazelaiamid/Caprolactam-Copolymer, Poly(caprolactam), Poly(hexamethylenadipamid), Poly(hexamethylenisophthalamid), Poly(2,2,2-trimethylhexamethylenterephthalamid), Poly(m-xylylenadipamid), Poly(p-xylylenadipamid), Poly(hexamethylenterephthalamid), Poly(dodecamethylenterephthalamid) und Mischungen davon.

5. Das Verfahren nach einem der vorstehenden Ansprüche, wobei die Trennschicht einen Polyester umfasst, bei dem es sich um Polyethylenterephthalat handelt.

6. Das Verfahren nach einem der vorstehenden Ansprüche, wobei mindestens eine Außenschicht ein polymeres Material umfasst, das aus der Gruppe von Polyethylen niedriger Dichte ausgewählt ist.

7. Das Verfahren nach einem der vorstehenden Ansprüche, wobei die erste druckempfindliche Haftmittelschicht eine polymere Schaumstoffschicht ist, die ein polymeres Grundmaterial umfasst, wobei das polymere Grundmaterial vorzugsweise ausgewählt ist aus der Gruppe bestehend aus Polyacrylaten, Polyurethanen, Polyolefinen, Polyaminen, Polyamiden, Polyestern, Polyethern, Polyisobutylenen, Polystyrolen, Polyvinylen, Polyvinylpyrrolidonen, Naturkautschuken, synthetischen Kautschuken, halogenierten Polymeren und beliebigen Kombinationen, Copolymeren oder Mischungen davon.

8. Das Verfahren nach Anspruch 7, das ferner eine zweite druckempfindliche Haftmittelschicht umfasst, die auf mindestens einer Außenoberfläche der ersten druckempfindlichen Haftmittelschicht angeordnet ist, wobei die zweite druckempfindliche Haftmittelschicht vorzugsweise zwischen der ersten druckempfindlichen Haftmittelschicht und der Trennschicht angeordnet ist.

9. Das Verfahren nach Anspruch 8, wobei die zweite druckempfindliche Haftmittelschicht ein polymeres Material umfasst, das ausgewählt ist aus der Gruppe bestehend aus Polyacrylaten, Polyurethanen, Polyolefinen, Polyaminen, Polyamiden, Polyestern, Polyethern, Polyisobutylenen, Polystyrolen, Polyvinylen, Polyvinylpyrrolidonen, Naturkautschuken, synthetischen Kautschuken und beliebigen Kombinationen, Copolymeren oder Mischungen davon.

10. Das Verfahren nach Anspruch 9, wobei die zweite druckempfindliche Haftmittelschicht ein polymeres Material umfasst, das ausgewählt ist aus der Gruppe bestehend aus Polyacrylaten, synthetischen Kautschuken und beliebigen Kombinationen, Copolymeren oder Mischungen davon.

11. Das Verfahren nach Anspruch 10, wobei das polymere Material ausgewählt ist aus der Gruppe bestehend aus linearen Blockcopolymeren, mehrarmigen Blockcopolymeren und beliebigen Kombinationen, Copolymeren oder Mischungen davon.

12. Das Verfahren nach einem der Ansprüche 10 oder 11, wobei das polymere Material ausgewählt ist aus der Gruppe bestehend aus mehrarmigen Blockcopolymeren, insbesondere Sternblockcopolymeren, besonders polymodalen, asymmetrischen Sternblockcopolymeren.

13. Das Verfahren nach Anspruch 12, wobei das Substrat ein Kraftfahrzeug-Außenteil, ein -Innenteil oder ein Karosserieteil eines Kraftfahrzeugs ist.

14. Verwendung eines Verfahrens gemäß einem der vorstehenden Ansprüche für die Befestigung von Außen- und Innenteilen, Klebebandabdichtung an der Karosserie, Klebebandabdichtung an der Tür und Dichtungsstreifen-Bandanwendungen für die Automobilindustrie.

## Revendications

1. Procédé de collage d'un premier et d'un deuxième substrat, qui comprend les étapes consistant à :
a) fournir un ensemble de ruban adhésif sensible à la pression comprenant une première couche autocollante et une protection anti-adhésive ayant une résistance maximale à la traction d'au moins 30 N/8 mm, lorsqu'elle est mesurée à une vitesse de 3000 mm/min selon le procédé de test de résistance à la traction décrit dans la section expérimentale, et dans lequel la protection anti-adhésive est un film à trois couches comprenant une couche interne et deux couches externes, dans lequel la couche interne comprend un matériau polymère choisi dans le groupe constitué des polyesters, des polyamides, et de toute combinaison, copolymère ou mélange de ceux-ci ; et dans lequel au moins une couche externe comprend un matériau polymère choisi dans le groupe des polyoléfines, en particulier une polyoléfine choisie dans le groupe constitué par les polyéthylènes ultra basse densité, basse densité et linéaire basse densité ;
b) exposer une surface externe de la première ou de la deuxième couche adhésive autocollante pour le collage, moyennant quoi la surface externe opposée de la première ou de la deuxième couche adhésive autocollante est liée à la protection anti-adhésive ;
c) coller la surface externe de la première ou de la deuxième couche adhésive autocollante, qui est exposée pour le collage au premier substrat ;
d) pré-fixer l'ensemble composite obtenu à l'étape c) au deuxième substrat, de préférence par des moyens mécaniques,
e) facultativement, retirer au moins une partie de la protection anti-adhésive qui est liée à la surface externe opposée de la première ou de la deuxième couche adhésive autocollante de manière à exposer au moins une partie de la surface externe opposée de la première ou de la deuxième couche adhésive autocollante ;
f) facultativement, coller la partie exposée de la surface externe opposée de la première ou de la deuxième couche adhésive autocollante sur le deuxième substrat ;
g) tirer la protection anti-adhésive ou la partie restante de la protection anti-adhésive ; et
h) coller la partie exposée de la surface externe opposée de la première ou de la deuxième couche adhésive autocollante sur le deuxième substrat.

2. Procédé selon la revendication 1, dans lequel la protection anti-adhésive a une résistance maximale à la traction d'au moins 35 N/8 mm, au moins 40 N/8 mm, au moins 45 N/8 mm, au moins 50 N/8 mm, au moins 60 N/8 mm, au moins 70 N/8 mm, au moins 80 N/8 mm, au moins 90 N/8 mm, ou même au moins 100 N/8 mm, lorsqu'on mesure à une vitesse de 3000 mm/min selon le procédé de test de résistance à la traction décrit dans la section expérimentale.

3. Procédé selon la revendication 1 ou 2, dans lequel la protection anti-adhésive a un allongement maximal d'au moins 100 %, d'au moins 200 %, d'au moins 300 %, ou même d'au moins 400 % lorsqu'il est mesuré à une vitesse de 3000 mm/min selon la méthode de test d'allongement décrite dans la section expérimentale.

4. Procédé selon l'une quelconque des revendications précédentes, dans lequel la protection anti-adhésive comprend un polyamide choisi dans le groupe constitué du poly(hexaméthylène adipamide), du poly(hexaméthylène sébacamide), du poly(heptaméthylène pimélamide), du poly(octaméthylène subéramide), du poly(hexaméthylène azélamide), du poly(nonaméthylène azélamide), du poly(décaméthylène azélamide), du poly(acide 4-aminobutyrique), du poly(acide 6-aminohexanoïque), du poly(acide 7-aminoheptanoïque), du poly(acide 8-aminoocatanoïque), du poly(acide 9-aminononanoïque), du poly(acide 1O-aminodécanoïque), du poly(acide 11-aminoundécanoïque), du poly(acide 12-aminododécanoïque, du copolymère de caprolactame/hexaméthylène adipamide, du copolymère d'hexaméthylène adipamide/caprolactame, du copolymère triméthylène adipamide/hexaméthylène azélaiamide, du copolymère hexaméthylène adipamide/hexaméthylène azélaiamide/caprolactame, du poly(caprolactame), du poly(hexaméthylène adipamide), du poly(hexaméthylène isophtalamide), du poly(2,2,2-triméthylhexaméthylène téréphtalamide), du poly(m-xylylène adipamide), du poly(p-xylylène adipamide), du poly(hexaméthylène téréphtalamide), du poly(dodécaméthylène téréphtalamide) et leurs mélanges.

5. Procédé selon l'une quelconque des revendications précédentes, dans lequel la protection anti-adhésive comprend un polyester qui est le poly(téréphtalate d'éthylène).

6. Procédé selon l'une quelconque des revendications précédentes, dans lequel au moins une couche externe comprend un matériau polymère choisi dans le groupe des polyéthylènes basse densité.

7. Procédé selon l'une quelconque des revendications précédentes, dans lequel la première couche adhésive autocollante est une couche de mousse polymère comprenant un matériau de base polymère, dans lequel le matériau de base polymère est de préférence choisi dans le groupe constitué des polyacrylates, des polyuréthanes, des polyoléfines, des polyamines, des polyamides, des polyesters, des polyéthers, du polyisobutylène, des polystyrènes, des polyvinyles, de la polyvinylpyrrolidone, des caoutchoucs naturels, des caoutchoucs synthétiques, des polymères halogénés et de toute combinaison, copolymère ou mélange de ceux-ci.

8. Procédé selon la revendication 7, qui comprend en outre une deuxième couche adhésive autocollante disposée sur au moins une surface externe de la première couche adhésive autocollante, dans lequel la deuxième couche adhésive autocollante est de préférence disposée entre la première couche adhésive autocollante et la protection anti-adhésive.

9. Procédé selon la revendication 8, dans lequel la deuxième couche adhésive autocollante comprend un matériau polymère choisi dans le groupe constitué des polyacrylates, des polyuréthanes, des polyoléfines, des polyamines, des polyamides, des polyesters, des polyéthers, du polyisobutylène, des polystyrènes, des polyvinyles, de la polyvinylpyrrolidone, des caoutchoucs naturels, des caoutchoucs synthétiques, et de toute combinaison, copolymère ou mélange de ceux-ci.

10. Procédé selon la revendication 9, dans lequel la deuxième couche adhésive autocollante comprend un matériau polymère choisi dans le groupe constitué par des polyacrylates, des caoutchoucs synthétiques, et toute combinaison, copolymère ou mélange de ceux-ci.

11. Procédé selon la revendication 10, dans lequel le matériau polymère est choisi dans le groupe constitué par les copolymères séquencés linéaires, les copolymères séquencés multi-bras, et toute combinaison, copolymère ou mélange de ceux-ci.

12. Procédé selon l'une quelconque de la revendication 10 ou 11, dans lequel le matériau polymère est choisi dans le groupe constitué par les copolymères séquencés multi-bras, en particulier les copolymères séquencés en étoile, plus particulièrement les copolymères séquencés en étoile polymodaux, asymétriques.

13. Procédé selon la revendication 12, dans lequel le substrat est une pièce extérieure d'automobile, une partie intérieure ou une partie de corps d'un véhicule automobile.

14. Utilisation d'un procédé selon l'une quelconque des revendications précédentes pour la fixation de parties extérieures et intérieures, l'application de joint collé sur un corps, de joint collé sur une porte, et de ruban coupe-froid pour l'industrie automobile.
